# EUROPEAN PATENT APPLICATION

(11) **EP 4 742 341 A1**
(43) Date of publication of application: **13.05.2026**
(21) Application number: 25202806.3
(22) Date of filing: 17.09.2025
(51) Int. Cl.: H01M 10/04, H01M 4/04, H01M 4/139, H01M 50/531, H01M 50/536, B32B 41/00

(54) **APPARATUS AND METHOD OF MANUFACTURING ELECTRODE PLATE FOR SECONDARY BATTERY**

(30) Priority: 12.11.2024 KR 20240159934
(71) Applicant: SAMSUNG SDI CO., LTD., Yongin-si, Gyeonggi-do 17084 (KR)
(72) Inventor: JUN, Pilgoo, 17084 Yongin-si,Gyeonggi-do (KR); LEE, Junsub, 17084 Yongin-si,Gyeonggi-do (KR)
(74) Representative: Michalski Hüttermann & Partner Patentanwälte mbB

(57) **Abstract**

An apparatus for manufacturing an electrode plate for a secondary battery, the apparatus including a welding unit contacting an electrode plate, the electrode plate including a stack of a plurality of substrates, the welding unit being configured to weld the plurality of substrates in a thickness direction, resulting in a welded surface, a coating unit configured to apply an insulating material onto the welded surface of the electrode plate, resulting in a coated insulating material, a welded-surface imaging unit outside the electrode plate, the welded-surface imaging unit being configured to capture an image of the welded surface, and a control unit electrically connected to the coating unit and the welded-surface imaging unit, the control unit being configured to receive, from the welded-surface imaging unit, information about the welded surface and move the coating unit above the electrode plate.

## Description

### BACKGROUND

### 1. Field

The present disclosure relates to an apparatus and a method of manufacturing an electrode plate for a secondary battery.

### 2. Description of the Related Art

Secondary batteries, which are capable of repeated charging and discharging, have recently been applied across various technical fields including electrical, electronic, communication, and computer industries.

Secondary batteries are not only widely used as energy sources for mobile electronic devices such as digital cameras, cellular phones, and notebook computers, but have also garnered attention as energy sources for hybrid electric vehicles, which have been proposed as a solution to address air pollution caused by conventional gasoline and diesel internal combustion engines using fossil fuels.

Research is being conducted in various aspects to improve performance and stability of secondary batteries according to their usage patterns and consumption levels.

The information disclosed in the background art is provided only to enhance understanding of the background of the present disclosure and thus may include information that does not constitute prior art.

### SUMMARY

Embodiments include an apparatus for manufacturing an electrode plate for a secondary battery, the apparatus including a welding unit contacting an electrode plate, the electrode plate including a stack of a plurality of substrates, the welding unit being configured to weld the plurality of substrates in a thickness direction, resulting in a welded surface, a coating unit configured to apply an insulating material onto the welded surface of the electrode plate, resulting in a coated insulating material, a welded-surface imaging unit outside the electrode plate, the welded-surface imaging unit being configured to capture an image of the welded surface, and a control unit electrically connected to the coating unit and the welded-surface imaging unit, the control unit being configured to receive, from the welded-surface imaging unit, information about the welded surface and move the coating unit above the electrode plate.

The welding unit may be an ultrasonic welding unit.

The apparatus may further include a drying unit configured to apply heat to the coated insulating material, resulting in a dried insulating material.

The apparatus may further include a coating-layer imaging unit outside the electrode plate, the coating-layer imaging unit being configured to capture an image of the coated insulating material.

The control unit may be configured to receive, from the coating-layer imaging unit, information about a coating layer and to control operation of the coating unit.

The apparatus may further include a drying-amount measuring unit outside the electrode plate, the drying-amount measuring unit being configured to capture an image of the dried insulating material.

The control unit may receive, from the drying-amount measuring unit, information on a drying amount of a coating layer, the control unit controlling operation of the drying unit.

The welding unit may include an anvil facing one side of the electrode plate, and a horn facing the anvil with the electrode plate therebetween, the horn being configured to weld the electrode plate by applying ultrasonic waves while pressing the electrode plate on the anvil.

The anvil and the horn may contact the electrode plate, each of the anvil and the horn being rotatable around a preset axis of rotation.

The welding unit may include a plurality of welding units, the plurality of welding units being on opposite sides about a transfer central axis of the electrode plate.

Embodiments include a method of manufacturing an electrode plate for a secondary battery, the method including transporting an electrode plate formed by stacking a plurality of substrates, welding, by a welding unit, the electrode plate in a thickness direction along a transport direction of the electrode plate, applying, by a coating unit, an insulating material onto a welded surface formed on the welded electrode plate, capturing, by a welded-surface imaging unit, an image of the welded surface of the electrode plate, and receiving, by a control unit, information about the welded surface from the welded-surface imaging unit, the control unit moving the coating unit above the electrode plate.

The welding unit may weld the plurality of substrates by ultrasonic welding.

The method may further include applying heat to the insulating material applied on the electrode plate after passing through the coating unit.

The method may further include capturing, by a coating-layer imaging unit disposed outside the electrode plate, an image of a coating layer formed on the electrode plate after passing through the coating unit.

The control unit may receive information about an imaged coating layer and controls operation of the coating unit.

The method may further include measuring a drying amount of a coating layer formed on the electrode plate after having undergone the applying heat.

The control unit may control an amount of drying of the electrode plate based on the drying amount of the coating layer.

The welding unit may include positioning an anvil to face one side of the electrode plate, and positioning a horn to face the anvil with the electrode plate disposed therebetween, the horn being configured to apply ultrasonic waves to weld the electrode plate on the anvil while pressing the electrode plate.

Each of the anvil and the horn may rotate about a preset axis of rotation, the anvil and the horn each being configured to contact the electrode plate.

The welding unit may include a plurality of the welding units, and the plurality of welding units may be disposed on opposite sides about a transfer central axis of the electrode plate.

### BRIEF DESCRIPTION OF THE DRAWINGS

Features will become apparent to those of ordinary skill in the art by describing in detail exemplary embodiments with reference to the attached drawings, in which:
FIG. 1 is a diagram schematically showing an apparatus for manufacturing an electrode plate for a secondary battery according to an embodiment;
FIGS. 2A and 2B are plan views illustrating a state in which a welded surface and a coating layer are formed by the apparatus for manufacturing an electrode plate for a secondary battery according to an embodiment;
FIG. 3 is a plan view illustrating a welded-surface imaging unit and a coating unit according to an embodiment;
FIG. 4 is a plan view illustrating a coating unit, a coating-layer imaging unit, a drying unit, and a drying-amount measuring unit according to an embodiment;
FIG. 5 is an enlarged view of portion A of FIG. 4;
FIG. 6 is a block diagram showing a control unit according to an embodiment;
FIG. 7 is a flowchart illustrating a method for manufacturing an electrode plate for a secondary battery according to an embodiment; and
FIG. 8 is a partially illustrated view of an electrode plate manufacturing apparatus according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used in the present specification and appended claims, terms and phrases should not be interpreted according to their conventional or customary meanings. Rather, the meaning of such terms and phrases should be construed in accordance with the technical concepts of the present disclosure, recognizing that the inventors may define specific terms to properly describe their disclosure. Therefore, the embodiments described herein and configurations illustrated in the drawings represent only some preferred embodiments of the present disclosure and do not represent all technical aspects thereof. Thus, it should be understood that various equivalents and modifications capable of replacing these embodiments may exist at the time of filing of the present application.

As used herein, the terms "comprises" and/or "comprising", or "includes" and/or "including" specify the presence of stated features, numbers, steps, operations, members, elements, or combinations thereof, but do not preclude the presence or addition of one or more other features, numbers, steps, operations, members, elements, or combinations thereof.

As used herein, the term 'identical' means 'substantially identical'. Therefore, substantially identical includes deviations considered insignificant in the art, for example, deviations within 5 %. As used herein, when a parameter is described as uniform in a given region, it means uniform in an average sense.

Although terms such as 'first', 'second', etc. are used to describe various elements, these elements are not limited by these terms. These terms are used merely to distinguish one element from another. For example, unless explicitly stated otherwise, a first element could be termed a second element without departing from the scope of the present disclosure.

As used herein, the singular forms are intended to include the plural forms as well, unless the context clearly indicates otherwise.

As used herein, reference to a structure being "on", "above", "over", "beneath", or "below" a component does not necessarily mean that the structure is in direct contact with the component. Rather, unless otherwise specified, intervening structures or layers may be disposed between the component and the referenced structure.

When an element is described as being "connected", "coupled", or "joined" to another element, these elements may be directly connected or joined to each other, or other elements may be "disposed" between the elements, or the elements may be "connected", "coupled", or "joined" through other elements. Furthermore, when a portion is described as being electrically coupled to another portion, this includes not only cases where they are directly connected but also cases where they are connected with other elements disposed therebetween.

As used herein, the expression "A and/or B" means A alone, B alone, or both A and B, unless explicitly stated otherwise. In other words, the term "and/or" includes any and all combinations of one or more of the associated listed items. As used herein, the term "C to D" means greater than or equal to C and less than or equal to D, unless otherwise specified.

The terms used herein are for describing particular embodiments and are not intended to limit the scope of the disclosure.

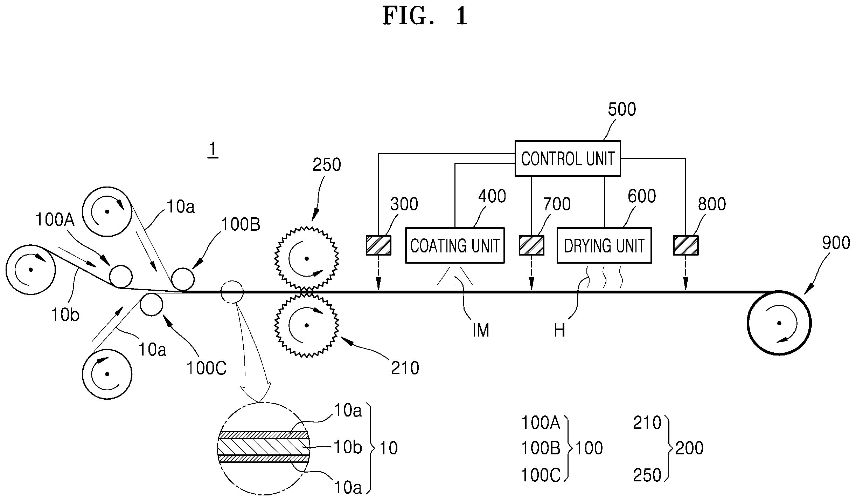

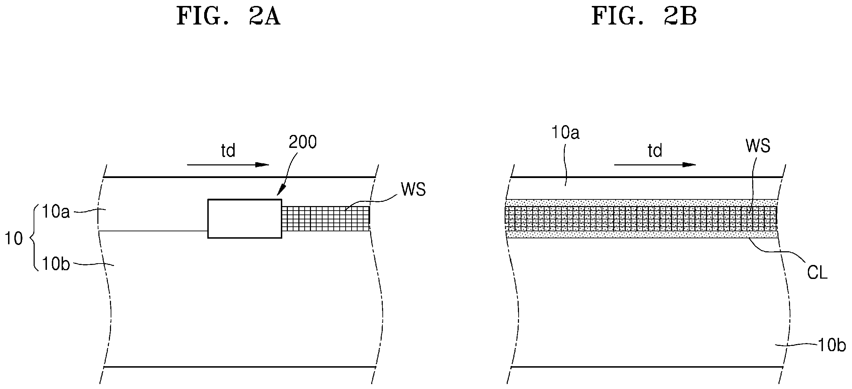

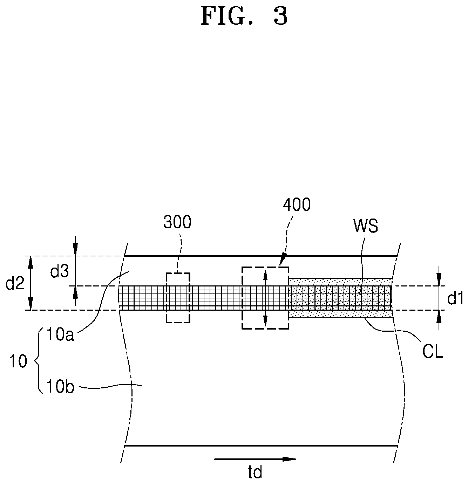

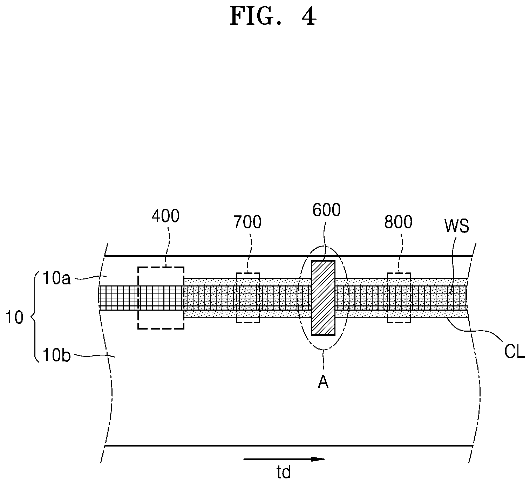

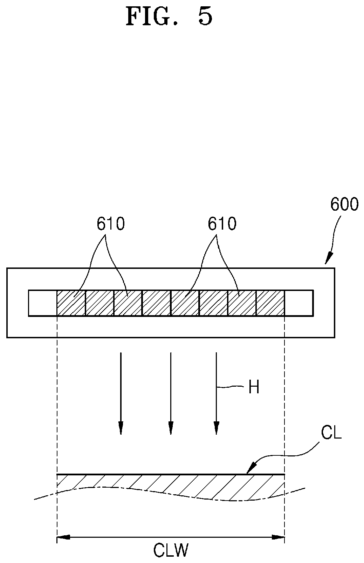

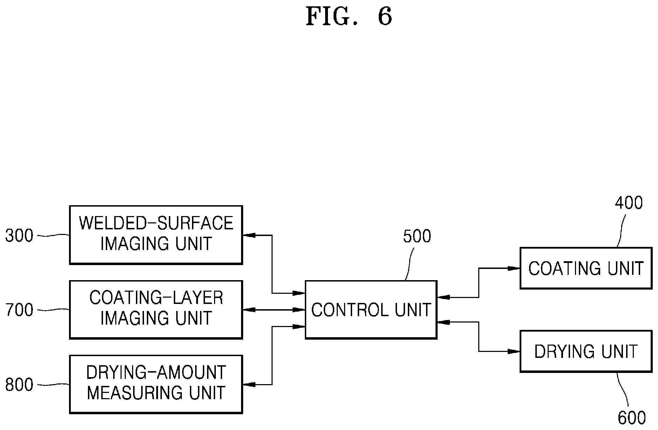

FIG. 1 is a diagram schematically showing an apparatus for manufacturing an electrode plate for a secondary battery according to an embodiment. FIGS. 2A and 2B are plan views illustrating a state in which a welded surface and a coating layer are formed by an apparatus for manufacturing an electrode plate for a secondary battery according to an embodiment. FIG. 3 is a plan view illustrating a welded-surface imaging unit and a coating unit according to an embodiment. FIG. 4 is a plan view illustrating a coating unit, a coating-layer imaging unit, a drying unit, and a drying-amount measuring unit according to an embodiment. FIG. 5 is an enlarged view of portion A of FIG. 4. FIG. 6 is a block diagram showing a control unit according to an embodiment.

Referring to FIGS. 1 to 6, an electrode plate manufacturing apparatus 1 according to an embodiment may be configured to manufacture an electrode plate 10 for a secondary battery and may include a transport unit 100, a welding unit 200, a coating unit 400, a welded-surface imaging unit 300, a control unit 500, a drying unit 600, a coating-layer imaging unit 700, a drying-amount measuring unit 800, and a winding unit 900.

In the present specification, the electrode plate 10 for a secondary battery may be formed by stacking a plurality of substrates made of different materials in a thickness direction (the up-down direction in FIG. 1). The electrode plate 10 may include a first substrate 10a and a second substrate 10b.

The first substrate 10a may be formed of a metal material, and for example, may be a foil made of aluminum (Al) or copper (Cu). The second substrate 10b may have a stacked structure in which a foil made of aluminum or copper- the same material as the first substrate 10a-is placed on both its upper and lower sides, with a polyethylene terephthalate (PET) film positioned in between.

The second substrate 10b includes a PET film in the present disclosure, but the film disposed between aluminum or copper foils arranged on the upper and lower sides of the second substrate 10b, may be implemented in various modifications including a polyimide (PI) film, a polypropylene (PP) film, a polyphenylene sulfide (PPS) film, a polyvinylidene fluoride (PVDF) film, or a polyethylene (PE) film, as long as such films provide physical protection and stability between the foils.

The second substrate 10b may have a coated region having an active material coated thereon and an uncoated region excluding the coated region.

Referring to FIG. 1, the electrode plate 10 may have the first substrate 10a positioned on the upper and lower sides (in the thickness direction) of the second substrate 10b, with the second substrate 10b disposed therebetween.

Referring to FIG. 1, the transport unit 100 according to an embodiment may move the electrode plate 10-for example, the first substrate 10a and the second substrate 10b-in a preset direction (from left to right in FIG. 1), and a plurality of such transport units may be provided.

A plurality of transport units 100A, 100B, 100C may each contact the first substrate 10a located in upper and lower portions of the electrode plate 10, and the second substrate 10b disposed therebetween, and may move the first substrate 10a and the second substrate 10b.

The transport unit 100 may be in a roller form that rotates about a preset axis of rotation. Among the plurality of transport units 100A, 100B, 100C, transport unit 100A of the plurality of transfer units 100A, 100B, 100C transporting the first substrate 10a and a transport unit 100B of the plurality of transfer units 100A, 100B, 100C transporting the second substrate 10b, which are positioned relatively above (based on FIG. 1), may rotate in the same direction, while the transport unit 100 transporting the first substrate 10a, which is positioned relatively below (based on FIG. 1), may rotate in the opposite direction.

As a result, the first substrate 10a and the second substrate 10b, each being supplied from a first substrate supply source and a second substrate supply source, respectively, where the first substrate 10a and the second substrate 10b are held in a wound state, respectively, may be transported in the same moving direction (from left to right in FIG. 1).

The first substrate 10a may be disposed in a preset region on the second substrate 10b. For example, the first substrate 10a may be positioned adjacent to a transfer central axis of the electrode plate. For example, the first substrate 10a may be positioned overlapping a preset region of a side portion of the second substrate 10b.

In another embodiment, this preset region on the second substrate 10b may be an uncoated region where no active material is applied.

In another embodiment, a plurality of each of the plurality of transport units 100A, 100B, 100C may be provided and may be spaced apart from each other at the same height. Consequently, transfer stability of the electrode plate 10 being transported and fed to the welding unit 200 may be enhanced.

Referring to FIGS. 1 and 2A, the welding unit 200 according to an embodiment may come into contact with the electrode plate 10 formed by stacking a plurality of substrates and may weld the plurality of substrates, for example, the first substrate 10a and the second substrate 10b, in the thickness direction (the up-down direction in FIG. 1).

The welding unit 200 may weld together the aluminum (or copper) foils disposed on the upper and lower sides of the second substrate 10b, with the PET film disposed therebetween. Further, the welding unit 200 may weld, in the thickness direction, the second substrate 10b, and a pair of the first substrate 10a disposed on the upper and lower sides of the second substrate 10b.

Thus, the aluminum (or copper) foils, which constitute the first substrate 10a and second substrate 10b and are physically apart with the PET film therebetween, are welded together, thereby enabling current flow.

Referring to FIG. 1, the welding unit 200 may weld a plurality of the first substrate 10a and the second substrate 10b by ultrasonic welding and may include an anvil 210 and a horn 250.

The anvil 210 may be positioned facing one side (the lower side based on FIG. 1) of the electrode plate 10, and may be positioned so as to face the horn 250 with the electrode plate 10 disposed therebetween. The anvil 210 may be positioned adjacent to one side (the lower side based on FIG. 1) of the electrode plate 10 and may contact and support the electrode plate 10.

The anvil 210 may be rotatable about a preset axis of rotation and may contact the electrode plate 10. As a result, the electrode plate 10 may be transported in a transport direction (from left to right in FIG. 1).

The anvil 210 and the horn 250, each configured as a roller, may transport the electrode plate 10 while maintaining contact with the electrode plate 10.

Referring to FIG. 1, the anvil 210 may have a plurality of protrusions formed so as to protrude along the outer circumferential surface thereof. The protrusions may be formed such that their cross-sectional area decreases the farther they radially extend from the center of the anvil 210. In another embodiment, the protrusions may be formed in a pyramidal shape.

Referring to FIG. 1, the horn 250 may be disposed facing the anvil 210 with the electrode plate 10 disposed therebetween and may apply ultrasonic waves to weld the electrode plate 10 on the anvil 210 while pressing (e.g., being in contact with and supporting) the electrode plate 10.

The horn 250 may be configured to contact the electrode plate 10 and apply ultrasonic vibration to the electrode plate 10. For example, the horn 250 may apply ultrasonic waves to the electrode plate 10 that is in contact with and supported by the anvil 210, thereby welding the electrode plate 10 in a thickness direction.

For example, the horn 250 may apply ultrasonic waves within a preset width on the portion of the first substrate 10a that overlaps a preset region of the second substrate 10b, thereby forming a welded surface WS.

The horn 250 may be positioned facing one side (the upper side based on FIG. 1) of the electrode plate 10, which is opposite to the other side (the lower side based on FIG. 1) where the anvil 210 is disposed, with the electrode plate 10 interposed therebetween. The horn 250 may contact and support the electrode plate 10.

The horn 250 may be rotatable about a preset axis of rotation and capable of contacting the electrode plate 10.

The horn 250 may rotate in an opposite direction from that of the anvil 210. As a result, the electrode plate 10 may be transported in the transport direction (from left to right in FIG. 1).

Referring to FIG. 1, the horn 250 may have a plurality of protrusions formed around the outer circumferential surface thereof. The protrusions may be shaped such that their cross-sectional area decreases the farther they radially extend from the center of the horn 250. In another embodiment, the protrusions may be formed in a pyramidal shape.

Due to the protrusions formed on the anvil 210 and the horn 250 according to an embodiment, the welded surface WS formed on the electrode plate 10, for example, in an overlap region where the first substrate 10a and the second substrate 10b overlap, may exhibit improved weldability.

Referring to FIG. 2A, the welding unit 200 may form the welded surface WS with a preset width on the electrode plate 10. For example, the welded surface WS may be formed to have a preset width on the first substrate 10a disposed on the second substrate 10b.

Referring to FIGS. 1 and 3, the welded-surface imaging unit 300 may be positioned outside the electrode plate 10 so as to capture an image of the welded surface WS formed on the electrode plate 10. The welded-surface imaging unit 300 may be positioned between the welding unit 200 and the coating unit 400.

The welded-surface imaging unit 300 may acquire, in image form, information on (e.g., about) the welded surface WS in a preset region. For example, the welded-surface imaging unit 300 may be a charge-coupled device (CCD) camera.

The welded-surface imaging unit 300 may be electrically connected to the control unit 500 and may transmit information on the welded surface WS in the form of electrical signals. The control unit 500 may receive information on the welded surface WS from the welded-surface imaging unit 300 and may acquire information on a width d2 of the welded surface WS, as well as a centerline of the welded surface WS formed on the electrode plate 10 in a lengthwise direction (or the transport direction td).

In another embodiment, the welded-surface imaging unit 300 may move in a preset direction above the electrode plate 10.

Referring to FIGS. 1, 3, 4, and 6, the coating unit 400 according to an embodiment may spray and apply an insulating material IM onto the welded surface WS formed on the electrode plate 10 that has passed through the welding unit 200, thereby applying the insulating material IM over a preset region.

The insulating material IM sprayed from the coating unit 400 may be a ceramic or hot-melt material. For example, the hot-melt material may be ethylene vinyl acetate (EVA), polyolefin, polyurethane (PUR), or polyimide (PI).

The coating unit 400 may spray and apply the insulating material IM onto the electrode plate 10, for example, onto the welded surface WS formed on the portion of the first substrate 10a that overlaps the second substrate 10b. The coating unit 400 may be electrically connected to the control unit 500, and upon receiving an electrical signal from the control unit 500, may spray and apply the insulating material IM (i.e., the coating layer CL) with a preset width and thickness.

Referring to FIG. 3, the coating unit 400 may receive an electrical signal from the control unit 500 and may move in a preset direction above the electrode plate 10.

The coating unit 400 may move at a preset angle, for example, perpendicular to the transport direction td (the left-right direction in FIG. 3) of the electrode plate 10, along the width direction (the up-down direction in FIG. 3) of the electrode plate 10 and the welded surface WS.

The coating unit 400 may form a coating layer CL by applying the insulating material IM so as to cover the welded surface WS formed on the electrode plate 10. The coating layer CL may be formed with a width relatively larger than a width of the welded surface WS formed on the electrode plate 10.

As a result, the coating layer CL formed by the insulating material IM sprayed and applied by the coating unit 400 may cover any burr generated during the process of forming the welded surface WS, thereby preventing the burr from being exposed externally and improving the safety of both the electrode plate 10 and the secondary battery.

The coating unit 400 may receive an electrical signal from the control unit 500 and move outside the electrode plate 10, thereby adjusting where the insulating material IM is sprayed or applied on the electrode plate 10. For example, the position of the coating layer CL formed by the insulating material IM may be adjusted.

For example, upon receiving an electrical signal from the control unit 500 indicating that the lengthwise central line of the welded surface WS has shifted from a first position to a second position, the coating unit 400 may be repositioned so that the lengthwise central line of the coating layer CL aligns with that of the welded surface WS.

As a result, even if the position of the welded surface WS formed on the electrode plate 10-after passing through the transport unit 100 and the welding unit 200-changes during transport of the electrode plate 10, the coating unit 400 may be adjusted correspondingly so that the coating layer CL continues to cover the welded surface WS.

The coating unit 400 may receive, in real time, information on the welded surface WS from the control unit 500, and may apply the insulating material IM onto the electrode plate 10 where the welded surface WS is formed, such that a lengthwise central line of the welded surface WS aligns with a lengthwise central line of the coating layer CL.

For example, the insulating material IM is applied onto the electrode plate 10, specifically onto the welded surface WS, thereby forming the coating layer CL. As the electrode plate 10 bearing the coating layer CL is transported, the electrode plate 10 then enters a drying unit 600 (described below), where the coating layer CL may be dried by the drying unit 600.

Referring to FIGS. 1, 4, and 5, the drying unit 600 according to an embodiment may apply heat H to the insulating material IM applied onto the electrode plate 10 that has passed through the coating unit 400, and may dry the coating layer CL formed by the insulating material IM.

Referring to FIG. 5, for convenience of illustration, a heat-generating unit 610 is shown arranged directly facing the coating layer CL, but it should be understood that the heat-generating unit 610 may be placed in various positions as long as such positions allow the heat-generating unit 610 to apply heat H toward the coating layer CL formed on the electrode plate 10.

Referring to FIG. 5, the drying unit 600 may include a plurality of the heat-generating unit 610 arranged along a width direction. The plurality of the heat-generating unit 610 may be electrically connected to the control unit 500 and may be driven independently upon receiving an electrical signal from the control unit 500.

The plurality of the heat-generating unit 610 may be disposed above the electrode plate 10 and may utilize a near-infrared (NIR) or laser method to apply heat H to the coating layer CL. However, any type of heat source capable of applying heat H to the coating layer CL may be used.

Referring to FIG. 5, the plurality of the heat-generating unit 610 included in the drying unit 600 may be arranged along a width direction (the left-right direction in FIG. 5), and heat H may be applied from only a portion of the plurality of heat-generating units 610, depending on the width of the coating unit 400.

Upon receiving an electrical signal from the control unit 500, the drying unit 600 may drive some or all of the plurality of the heat-generating unit 610 and may apply heat H over an area corresponding to a width CLW of the coating layer CL formed on the electrode plate 10.

The drying unit 600 may receive an electrical signal from the control unit 500 and may adjust the width, intensity, and the like, of the heat H transmitted from the plurality of the heat-generating unit 610.

Referring to FIG. 5, the plurality of the heat-generating unit 610 are shown in a single row; but various modifications are possible, such that the plurality of the heat-generating unit 610 may be provided in multiple rows in parallel along the transport direction td (the left-right direction in FIG. 4) of the electrode plate 10.

Referring to FIGS. 1 and 4, a coating-layer imaging unit 700 according to an embodiment may be positioned outside the electrode plate 10 and may capture an image of the electrode plate 10 that has passed through the coating unit 400. The coating-layer imaging unit 700 may be electrically connected to the control unit 500 and may transmit information on (e.g., about) the coating layer CL to the control unit 500.

Referring to FIG. 1, the coating-layer imaging unit 700 may be disposed between the coating unit 400 and the drying unit 600 in the transfer direction td. The coating-layer imaging unit 700 may acquire, in image form, information on the coating layer CL formed on the electrode plate 10 that has passed through the coating unit 400. For example, the coating-layer imaging unit 700 may be a charge-coupled device (CCD) camera.

The control unit 500 may receive information on the coating layer CL from the coating-layer imaging unit 700 and may acquire information about a width of the coating layer CL and a central line of the coating layer CL formed on the electrode plate 10 in a lengthwise direction (or the transport direction td).

In another embodiment, the coating-layer imaging unit 700 may move in a preset direction above the electrode plate 10.

The control unit 500 may receive information on the coating layer CL from the coating-layer imaging unit 700 and may control the operation of the drying unit 600. For example, the control unit 500 may adjust a drying region of the drying unit 600.

For example, based on information about the width of the coating layer CL image-captured by the coating-layer imaging unit 700, the control unit 500 may control the operation of the drying unit 600 so that heat H is applied only to the region corresponding to the width of the coating layer CL.

For example, upon receiving an electrical signal from the control unit 500, the drying unit 600 may drive only those of the plurality of the heat-generating unit 610 arranged along the width direction, that can apply heat H to the region corresponding to the width of the coating layer CL, thereby applying heat H to the coating layer CL.

Since heat H is applied, by the drying unit 600, specifically by the plurality of the heat-generating unit 610, only to the region that corresponds to the width of the coating layer CL, it may be possible to prevent over-drying of the coating layer CL.

In another embodiment, the control unit 500 may receive information about the coating layer CL from the coating-layer imaging unit 700 and control the operation of the coating unit 400. For example, the control unit 500 may adjust the width and thickness of the insulating material IM sprayed by the coating unit 400. Furthermore, the control unit 500 may also move the position of the coating unit 400 above the electrode plate 10.

Referring to FIGS. 1 and 4, the drying-amount measuring unit 800 according to an embodiment may be positioned outside the electrode plate 10 and may capture an image of the coating layer CL formed on the electrode plate 10 that has passed through the drying unit 600.

The coating layer CL refers to the coating layer that has been sprayed or applied by the coating unit 400 onto the electrode plate 10-specifically covering the welded surface WS-and has received heat while passing through the drying unit 600.

A drying-amount imaging unit may acquire, in image form, information on the coating layer CL in a preset area. For example, the drying-amount imaging unit may be a charge-coupled device (CCD) camera.

The control unit 500 may receive, from the drying-amount measuring unit 800, information on a drying amount of the coating layer CL having passed through the drying unit 600 and may control the operation of the drying unit 600.

For example, the control unit 500 may receive, from the drying-amount measuring unit 800, an image of a preset region of the dried coating layer CL, and may receive information on a black-to-white ratio in the image and control operation of the drying unit 600.

If the black-to-white ratio in the image is equal to or less than a preset value, the control unit 500 may determine that the coating layer CL has been over-dried by the drying unit 600, and may transmit an electrical signal to the drying unit 600 to adjust the amount of drying.

Referring to FIG. 6, the control unit 500 according to an embodiment may be electrically connected to the welded-surface imaging unit 300, the coating unit 400, the drying unit 600, the coating-layer imaging unit 700, and the drying-amount measuring unit 800, and may control operation of the welded-surface imaging unit 300, the coating unit 400, the drying unit 600, the coating-layer imaging unit 700, and the drying-amount measuring unit 800. A detailed description of the control unit 500 is omitted herein for the sake of brevity, as it has already been described above.

Referring to FIG. 1, the winding unit 900 according to an embodiment may wind the electrode plate 10, which is transported by the transport unit 100 and has passed through the welding unit 200, the coating unit 400, and the drying unit 600, and may rotate about a preset axis of rotation.

For example, the welded surface WS may be formed on the second substrate 10b in an overlap region with the first substrate 10a. While the electrode plate 10 having the welded surface WS formed thereon passes through the coating unit 400, a coating layer CL covering the welded surface WS may be formed, and while passing through the drying unit 600, the coating layer CL may be dried, whereupon the electrode plate 10 enters the winding unit 900.

The winding unit 900 may rotate while in contact with the electrode plate 10, and as the winding unit 900 rotates, the electrode plate 10 may be wound. In the present disclosure, the electrode plate 10 wound by the winding unit 900 may be a 'substrate-tab welded electrode plate.'

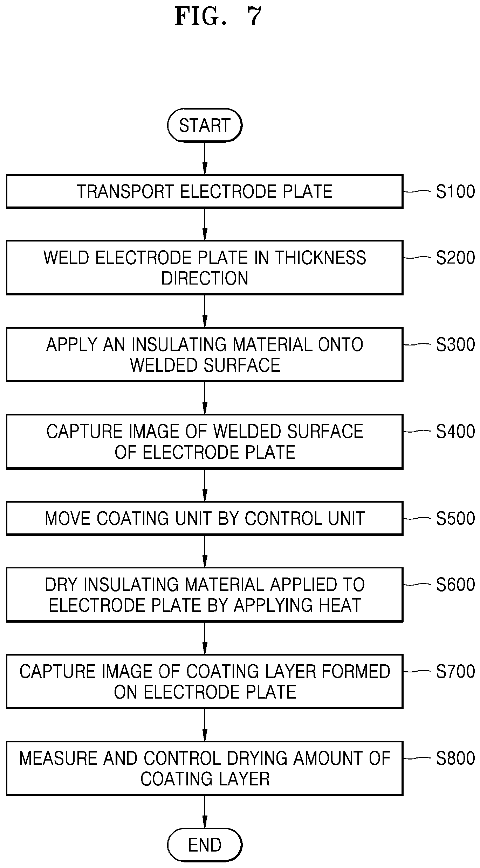

Hereinbelow, a method of manufacturing an electrode plate for a secondary battery according to an embodiment and advantages thereof will be described. FIG. 7 is a flowchart illustrating a method of manufacturing an electrode plate for a secondary battery according to an embodiment.

Referring to FIG. 7, the method of manufacturing an electrode plate for a secondary battery according to an embodiment may include: transporting an electrode plate (S100); welding the electrode plate in a thickness direction (S200); applying an insulating material onto a welded surface (S300); capturing an image of the welded surface of the electrode plate (S400); moving a coating unit by a control unit (S500); drying by applying heat to the insulating material applied on the electrode plate (S600); capturing an image of a coating layer formed on the electrode plate (S700); and measuring and controlling a drying amount of the coating layer (S800).

Referring to FIG. 1, in step S100 of transporting the electrode plate, the electrode plate 10 formed by stacking a plurality of substrates may be transported in a preset direction (from left to right in FIG. 1).

For example, the electrode plate 10 may have a structure in which the first substrate 10a and the second substrate 10b, made of different materials, are stacked, and the second substrate 10b may have a stacked structure in which a foil made of aluminum or copper- the same material as the first substrate 10a-is placed on both its upper and lower sides, with a polyethylene terephthalate (PET) film disposed in between.

Referring to FIG. 1, by a plurality of transport units 100A, 100B, 100C, the first substrate 10a may be placed on both the upper and lower sides of the second substrate 10b and transported together with the second substrate 10b disposed therebetween.

Referring to FIG. 2A, the electrode plate 10 may have a structure in which a portion (upper part based on FIG. 2A) of the second substrate 10b is overlapped on both its upper and lower sides (based on FIG. 1) by the first substrate 10a. This stacked structure may then enter the welding unit 200.

Referring to FIGS. 1, 2A, and 7, in step S200 of welding the electrode plate in the thickness direction, the welding unit 200 may weld the electrode plate 10 in the thickness direction along the transport direction td of the electrode plate 10.

For example, according to an embodiment, the welding unit 200 may employ an ultrasonic welding method to weld the electrode plate 10 in the thickness direction (i.e., the up-down direction based on FIG. 1). Along the transport direction, a welded surface WS may be formed on the electrode plate 10, specifically on an overlap region of the first substrate 10a and the second substrate 10b.

Referring to FIGS. 1, 2B, 3, and 7, in step S300 of applying the insulating material IM onto the welded surface WS, the insulating material IM may be applied, by the coating unit 400, onto the welded surface WS, which is formed on the electrode plate 10 as the electrode plate 10 passes through the welding unit 200. This insulating material IM may form a coating layer CL on the welded surface WS.

Referring to FIGS. 1, 3, and 7, in step S400 of capturing an image of the welded surface of the electrode plate, the welded-surface imaging unit 300, positioned between the welding unit 200 and the coating unit 400, may capture an image of the welded surface WS formed on the electrode plate 10.

The welded-surface imaging unit 300 may acquire information on the welded surface WS in image form within a preset region and transmit the information on the welded surface WS to the control unit 500.

Referring to FIGS. 3 and 7, in step S500 of moving the coating unit by the control unit, the control unit 500 may transmit an electrical signal to the coating unit 400 and move the coating unit 400, wherein the coating unit 400 may move at a preset angle, for example, perpendicular to the transport direction td of the electrode plate 10 on which the welded surface WS is formed.

For example, the coating unit 400 may receive an electrical signal from the control unit 500 and move along a width direction of the electrode plate 10 (the up-down direction in FIG. 1).

The control unit 500 may acquire (e.g., or receive), from the welded-surface imaging unit 300, information about a width of the welded surface WS and a lengthwise centerline of the welded surface WS formed on the electrode plate 10.

The control unit 500 may define the lengthwise centerline of the welded surface WS as a first line, and define a lengthwise centerline of the coating layer CL, which is formed by spraying and applying the insulating material IM by the coating unit 400, as a second line.

From the information about the welded surface WS transmitted by the welded-surface imaging unit 300, the control unit 500 may calculate the first line and set the second line so as to coincide with the first line. For example, when the coating layer CL is formed by spraying and applying the insulating material IM by the coating unit 400, the control unit 500 may adjust the position of the coating unit 400 so that the second line-centrally formed along a width direction of the coating layer CL-coincides with the first line.

For example, the control unit 500 may receive information about a width d1 of the welded surface WS from the welded-surface imaging unit 300, and by transmitting an electrical signal to the coating unit 400, may control operation of the coating unit 400 so as to form the coating layer CL with a width relatively larger than that of the welded surface WS.

Referring also to FIG. 3, the control unit 500 may calculate the width of the welded surface WS based on information obtained from the welded-surface imaging unit 300. Specifically, the width of the welded surface WS may be calculated by subtracting a distance d3, measured from the edge of the first substrate 10a to the starting point of the welded surface WS, from the total width d2 of the first substrate 10a.

As a result, even if the position of the electrode plate 10 transported by the transport unit 100 changes or if the position of the welded surface WS formed on the electrode plate 10 while passing through the welding unit 200 changes, the position of the coating unit 400 may adjust accordingly, thereby allowing the coating layer CL to reliably cover the welded surface WS.

As a result, it is possible to prevent any burr that may have formed on the welded surface WS during the formation of the welded surface WS from being exposed externally.

Referring to FIGS. 1, 4, 5, and 7, the drying step S600 of applying heat to the insulating material applied on the electrode plate may include applying heat H to the coating layer CL formed of the insulating material IM applied on the electrode plate 10, specifically on the welded surface WS formed in a preset region within the overlap region of the first substrate 10a and the second substrate 10b, thereby drying the coating layer CL.

In the drying step S600, the drying unit 600 may receive information on the coating layer CL-for example, information on a width CLW of the coating layer CL-from the control unit 500, and may drive only those heat-generating units 610, among a plurality of the heat-generating unit 610 arranged along a width direction, that correspond to the width CLW of the coating layer CL.

As a result, a drying region corresponding to the width CLW of the coating layer CL is formed, preventing heat H from being applied to regions where the coating layer CL is not formed and thereby avoiding over-drying that could occur if more heat H than necessary were applied to the coating layer CL on the electrode plate 10.

Referring to FIGS. 1, 4, 6, and 7, in step S700 of capturing an image of the coating layer formed on the electrode plate, the coating-layer imaging unit 700 may capture an image of the coating layer CL formed on the electrode plate 10 that has passed through the coating unit 400.

The coating-layer imaging unit 700 may acquire information on the coating layer CL in image form and transmit this information to the control unit 500 as an electrical signal. The control unit 500 may receive, from the coating-layer imaging unit 700, information on the coating layer CL, for example, information on the width of the coating layer CL, and may set a drying region accordingly.

Since the control unit 500 controls operation of the coating unit 400, the width of the coating layer CL being formed on the welded surface WS may vary. By capturing an image of the coating layer CL, the coating-layer imaging unit 700 may transmit information on the coating layer CL in real time to the control unit 500.

Referring to FIGS. 1, 4, 8, and 7, in step S800 of measuring and controlling the drying amount of the coating layer CL, the drying-amount measuring unit 800 may measure the drying amount of the coating layer CL that has passed through a drying unit 600, and may acquire drying amount-related information in image form.

The drying-amount measuring unit 800 may transmit information on the drying amount (e.g., the extent of drying) of the coating layer CL to the control unit 500 as an electrical signal. The control unit 500 may, from information on the coating layer CL dried in step S800, calculate a ratio of black to white in the coating-layer CL image.

If the control unit 500 determines that the black-to-white ratio in the coating-layer CL image is at or below a preset value, the control unit 500 may determine that the coating layer CL has been over-dried by the drying unit 600 and may transmit an electrical signal to the drying unit 600 to adjust the amount of drying.

As a result, it is possible to prevent the coating layer CL formed on the welded surface WS on the electrode plate 10 from being over-dried by the heat H applied from the drying unit 600.

Referring to FIG. 1, the coating layer CL formed on the welded surface WS on the electrode plate 10, once fully dried, may be wound by the winding unit 900.

Hereinbelow, the apparatus for manufacturing an electrode plate for a secondary battery according to another embodiment, and the operational principle and advantages thereof, will be described.

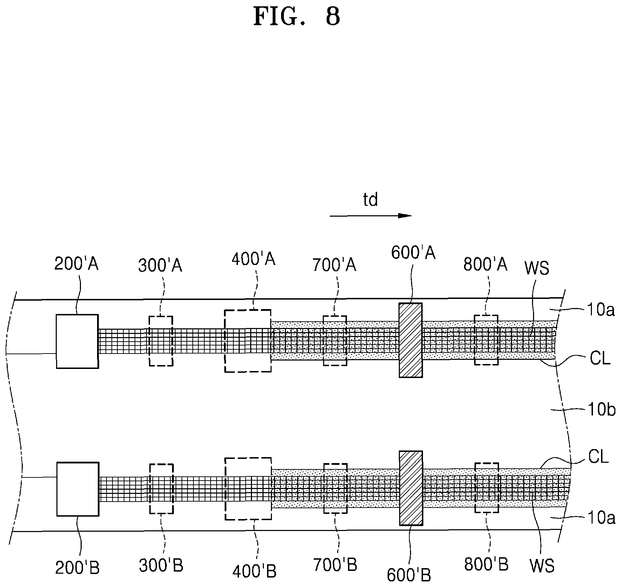

Referring to FIG. 8, the apparatus for manufacturing an electrode plate for a secondary battery according to another embodiment may include welding units 200'A, 200'B, welded-surface imaging units 300'A, 300'B, coating units 400'A, 400'B, drying units 600'A, 600'B, coating-layer imaging units 700'A, 700'B, and drying-amount measuring units 800'A, 800'B.

The apparatus for manufacturing an electrode plate for a secondary battery according to another embodiment may include paired units arranged in two rows about the transfer central axis of the electrode plate 10, with a welding unit 200'A of the welding units 220'A, 200'B, the welded-surface imaging unit 300'A, the coating unit 400'A of the coating units 400'A, 400'B, a coating-layer imaging unit 700'A of the coating layer imaging units 700'A, 700'B, a drying unit 600'A of the drying units 600'A, 600'B, and the drying-amount measuring unit 800'A arranged on one side, and the welding unit 200'B of the welding units 220'A, 200'B, the welded-surface imaging unit 300'B, the coating unit 400'B, a coating-layer imaging unit 700'B of the coating layer imaging units 700'A, 700'B, a drying unit 600'B of the drying units 600'A, 600'B, and the drying-amount measuring unit 800'B arranged on the other side. Apart from that arrangement, the apparatus includes the entire configuration of the transport unit 100, the control unit 500, and the winding unit 900 of the electrode plate manufacturing apparatus 1 according to the previous embodiment. Since the welding unit 200, the welded-surface imaging unit 300, the coating unit 400, the drying unit 600, the coating-layer imaging unit 700, the drying-amount measuring unit 800, and the winding unit 900 have the same configuration and advantages as described in the previous embodiment, a detailed explanation of any overlapping content is omitted.

The apparatus and method for manufacturing an electrode plate for a secondary battery according to embodiments may weld a plurality of substrates in a thickness direction to enable current flow across upper and lower parts of the electrode plate, and cover any burrs that may have formed on the welded surface with a coating layer, thereby ensuring the safety of the electrode plate.

For example, by adjusting the position of the coating unit that forms the coating layer so as to correspond to the position of the welded surface, reliability may be ensured.

Furthermore, by controlling the drying region in a drying unit-specifically in a heat-generating unit that applies heat-depending on the width of the coating layer that covers the welded surface, it is possible to prevent over-drying of other areas of the electrode plate where the coating layer is not formed.

Moreover, by controlling the amount of drying according to a black-to-white ratio in the drying region on the coating layer, it is possible to prevent the coating layer from becoming over-dried.

According to embodiments, in an electrode plate formed by stacking a plurality of substrates, a coating layer can be formed by applying an insulating material onto a welded surface formed through upper and lower welding. As a result, it is possible to prevent any burr generated on the welded surface during the welding process from being exposed externally, thereby ensuring safety.

Further, by detecting the position of the welded surface and adjusting the position of the coating unit that applies the insulating material accordingly, it is possible to form a coating layer with a uniform width or thickness.

However, the advantages obtainable through the present disclosure are not limited to those described above, and other technical advantages not mentioned herein will be clearly understood by those skilled in the art from the description of the embodiments set forth below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### Reference Signs List

- 1: Electrode plate manufacturing apparatus
- 10: Electrode plate
- 10a: First substrate
- 10b: Second substrate
- 100: Transport unit
- 100A: Transport unit (example A)
- 100B: Transport unit (example B)
- 100C: Transport unit (example C)
- 200: Welding unit
- 210: Anvil
- 250: Horn
- 300: Welded-surface imaging unit
- 400: Coating unit
- 500: Control unit
- 600: Drying unit
- 610: Heat-generating unit of drying unit
- 700: Coating-layer imaging unit
- 800: Drying-amount measuring unit
- 900: Winding unit
- CL: Coating layer
- CLW: Width of coating layer
- IM: Insulating material
- WS: Welded surface
- td: Transport direction
- H: Heat
- d1: Width of welded surface
- d2: Width of first substrate
- d3: Distance from edge of first substrate to start of welded surface
- A: Enlarged portion (of FIG. 4)
- 200'A: Welding unit (row A)
- 200'B: Welding unit (row B)
- 300'A: Welded-surface imaging unit (row A)
- 300'B: Welded-surface imaging unit (row B)
- 400'A: Coating unit (row A)
- 400'B: Coating unit (row B)
- 600'A: Drying unit (row A)
- 600'B: Drying unit (row B)
- 700'A: Coating-layer imaging unit (row A)
- 700'B: Coating-layer imaging unit (row B)
- 800'A: Drying-amount measuring unit (row A)
- 800'B: Drying-amount measuring unit (row B)

## Claims

1. An apparatus (1) for manufacturing an electrode plate (10) for a secondary battery, the apparatus (1) comprising:
a welding unit (200) contacting an electrode plate (10), the electrode plate (10) including a stack of a plurality of substrates (10a, 10b), the welding unit (200) being configured to weld the plurality of substrates (10a, 10b) in a thickness direction, resulting in a welded surface (WS);
a coating unit (400) configured to form a coating layer (CL) by applying an insulating material (IM) onto the welded surface (WS) of the electrode plate (10);
a welded-surface imaging unit (300) outside the electrode plate (10), the welded-surface imaging unit (300) being configured to capture an image of the welded surface (WS); and
a control unit (500) electrically connected to the coating unit (400) and the welded-surface imaging unit (300), the control unit (500) being configured to receive, from the welded-surface imaging unit (300), information about the welded surface (WS) and move the coating unit (400) with respect to the electrode plate (10).

2. The apparatus (1) as claimed in claim 1, wherein the welding unit (200) is an ultrasonic welding unit.

3. The apparatus (1) as claimed in any of the preceding claims, further comprising a coating-layer imaging unit (700) outside the electrode plate (10), the coating-layer imaging unit (700) being configured to capture an image of the coating layer (CL).

4. The apparatus (1) as claimed in claim 3, wherein the control unit (500) is configured to receive, from the coating-layer imaging unit (700), information about the coating layer (CL) and to control operation of the coating unit (400).

5. The apparatus (1) as claimed in any of the preceding claims, further comprising a drying unit (600) configured to apply heat (H) to the coating layer (CL), resulting in a dried coating layer (CL).

6. The apparatus (1) as claimed in claim 5, further comprising a drying-amount measuring unit (800) outside the electrode plate, the drying-amount measuring unit (800) being configured to capture an image of the dried coating layer (CL).

7. The apparatus (1) as claimed in claim 6, wherein the control unit (500) receives, from the drying-amount measuring unit (800), information on a drying amount of the coating layer (CL), the control unit (500) controlling operation of the drying unit (600).

8. The apparatus (1) as claimed in any of the preceding claims, wherein the welding unit (200) comprises:
an anvil (210) facing one side of the electrode plate (10); and
a horn (250) facing the anvil (210) with the electrode plate (10) therebetween, the horn (250) being configured to weld the electrode plate (10) by applying ultrasonic waves while pressing the electrode plate (10) on the anvil (210).

9. A method of manufacturing an electrode plate (10) for a secondary battery, the method preferably being performed by an apparatus (1) configured according to any of the preceding claims, the method comprising:
transporting an electrode plate (10) formed by stacking a plurality of substrates (10a, 10b);
welding, by a welding unit (200), the electrode plate (10) in a thickness direction along a transport direction of the electrode plate (10);
applying, by a coating unit (400), an insulating material (IM) onto a welded surface (WS) formed on the welded electrode plate (10);
capturing, by a welded-surface imaging unit (300), an image of the welded surface (WS) of the electrode plate (10); and
receiving, by a control unit (500), information about the welded surface (WS) from the welded-surface imaging unit (300), the control unit (500) controlling the coating unit (400) to move with respect to the electrode plate (10).

10. The method as claimed in claim 9, wherein the welding unit (200) welds the plurality of substrates (10a, 10b) by ultrasonic welding.

11. The method as claimed in any of claims 9 or 10, further comprising applying heat (H) to the insulating material (IM) applied on the electrode plate (10) after passing through the coating unit (400).

12. The method as claimed in any of claims 9 to 11, further comprising capturing, by a coating-layer imaging unit (700) disposed outside the electrode plate (10), an image of a coating layer formed on the electrode plate (10) after passing through the coating unit (400).

13. The method as claimed in claim 12, wherein the control unit (500) receives information about the captured image and controls operation of the coating unit (400).

14. The method as claimed in claim 11, further comprising measuring a drying amount of a coating layer (CL) formed on the electrode plate (10) after having undergone the applying heat (H).

15. The method as claimed in any of claims 9 to 14, wherein welding the electrode plate (10) in a thickness direction comprises:
positioning an anvil (210) to face one side of the electrode plate (10); and
positioning a horn (250) to face the anvil (210) with the electrode plate (10) disposed therebetween, and
applying ultrasonic waves by the horn (250) to weld the electrode plate (10) on the anvil (210) while pressing the electrode plate (10).
